Europäisches Patentamt

European Patent Office

Office européen des brevets

(11) Veröffentlichungsnummer: **0 269 961 B1**

(12) **EUROPÄISCHE PATENTSCHRIFT**

(45) Veröffentlichungstag der Patentschrift: **28.10.92**

(21) Anmeldenummer: **87117126.0**

(22) Anmeldetag: **20.11.87**

(51) Int. Cl.⁵: **H04N 11/00**

(54) **Verfahren zur kompatiblen Erhöhung der Auflösung bei einem Farbfernsehsystem.**

(30) Priorität: **29.11.86 DE 3640848**

(43) Veröffentlichungstag der Anmeldung:
**08.06.88 Patentblatt 88/23**

(45) Bekanntmachung des Hinweises auf die
Patenterteilung:
**28.10.92 Patentblatt 92/44**

(84) Benannte Vertragsstaaten:
**AT BE CH DE ES FR GB GR IT LI LU NL SE**

(56) Entgegenhaltungen:
**EP-A- 0 146 694**
**EP-A- 0 158 770**

**FERNSEH-UND KINO-TECHNIK, Band 39, Nr. 3, März 1985, Seiten 115-122, Berlin, DE; E. GÜTTNER et al.: "Konzeption zur kompatiblen Verbesserung der Bildqualität bei PAL-Übertragung"**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Plantholt, Martin, Dr. Ing.**
**Deveser Strasse 11**
**W-3005 Hemmingen 1(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

## Beschreibung

Für eine kompatible Erhöhung der Detailauflösung bei der Farbfernsehübertragung ist in "Fernseh- und Kinotechnik", 34. Jahrgang, Nr. 2/1980, Seiten 41-48 das Verfahren der sogenannten Offsetabtastung unter Verwendung der planaren Vor-und Nachfilterung beschrieben. Ähnliche Abtastverfahren, sogenannte Sub-Nyquist-Sampling-Verfahren, sind beschrieben in "A Single Channel HDTV Broadcast System - the MUSE -", NHK Laboratories Note, Serial No. 304, September, 1984.

Bei dem genannten Verfahren wird das Signal über einen bandbegrenzten Kanal übertragen, wobei ein Anteil des Signals innerhalb eines Frequenzteilbereiches, der die Auflösungserhöhung bewirkt, nicht in der spektralen Originallage übermittelt wird, sondern durch die Offsetabtastung oder Offsetmodulation in eine trägerfrequente Lage, eine sogenannte Offsetlage, versetzt wird. Beispielsweise wird ein Signalanteil, der mit einem üblichen Fernsehkanal von 5 MHz Bandbreite nicht mehr übertragen werden kann, durch die Offsetmodulation in eine Frequenzlage innerhalb des Kanals umgesetzt, der zusammen mit dem eigentlichen Basisband-Videosignal von 0-5 MHz über den üblichen Fernsehkanal übertragen werden kann. Die Abtast-Modulationsfrequenz, also die Frequenz eines die Offsetmodulation bewirkenden Signals, liegt bei dem bekannten Verfahren außerhalb der Bandbreite des Übertragungskanals. Auf der Wiedergabeseite muß durch eine Offsetdemodulation das in die Offsetlage transponierte Signal wieder in seine ursprüngliche Frequenzlage umgesetzt werden, damit es die erhöhte Auflösung bewirken kann. Zur Rekonstruktion dieses Signalanteils in die originale Spektrallage ist empfängerseitig eine synchrone Nachabtastung/Demodulation notwendig. Die in Basislage übertragenen Spektralanteile und die durch die Offsetdemodulation aus der trägerfrequenten Lage in die Originallage zurückversetzten spektralen Anteile werden bei dem angegebenen Verfahren mittels eines Nyquistfilters aneinandergefügt. Bei einer kompatiblen Ausführung werden für den standardmäßigen Empfänger durch die zusätzlich in den Kanal aufgenommene Signalinformation Beeinträchtigungen deutlich, die sich je nach Art der Verteilung der Zusatzinformation über zwei oder mehrere Teilbilder des Standard-Zeilensprungsystems in unterschiedlich frequenten Flakkerstörungen äußern. Sofern die Information für die Leuchtdichte und die Farbe nicht übersprechfrei übertragen wird (PAL, NTSC, SECAM), entstehen durch die zusätzliche Signalinformation weitere Übersprechprobleme. Zur Verbesserung der Kompatibilität ist durch die EP-A-0 146 694 ein der Offsetabtastung äquivalentes Modulationsverfahren (Offsetmodulation) mit einer senderseitigen Amplitudenabsenkung der zusätzlichen Signalinformation bekannt.

Ein Synchronisationsverfahren, das die empfängerseitige Synchrone Nachabtastung bzw. Offsetdemodulation sicherstellt, ist in der EP-A-0 158 770 beschrieben. Dieses Synchronisationsverfahren arbeitet mit einem Phasenreferenzsignal, das bei der halben Abtast/Modulationsfrequenz im 6 dB-Punkt des Nyquistfilters liegt.

Mit dem Übergang auf ein Modulationsverfahren gemäß der EP-A-0 146 694 ist es aus nachrichtentechnischer Sicht nicht mehr zwingend, das Gesamtsystem mit einem Nyquistkanal auszubilden. Daher kann das Spektrum der Gesamtinformation innerhalb der Bandbreite des Übertragungskanals nach anderen Gesichtspunkten aufgeteilt werden.

Zur weiteren Verbesserung der Kompatibilität bei Anwendung des Offsetmodulationsverfahrens bei PAL ist in der DE-A-34 35 264 eine Tiefpaßfilterung der zusätzlichen Signalinformation vorgeschlagen. Damit wird der Überlappungsbereich zwischen geträgerter Chrominanzinformation und zusätzlicher Leuchtdichteinformation (Auflösungserhöhung) reduziert und der kompatible Empfang durch Cross-Color-Störungen aufgrund der Offsetmodulation nicht mehr sichtbar beeinträchtigt.

Durch die Tiefpaßfilterung wird der Spektralbereich der Gesamtinformation nicht mehr symmetrisch aufgeteilt wie bei der Nyquistfilterung, sondern es findet eine unsymmetrische Frequenzbandteilung statt. Somit läßt sich der phasenempfindliche Punkt der Spektraladdition nicht mehr durch ein Referenzsignal der halben Modulationsfrequenz repräsentieren.

Der Erfindung liegt die Aufgabe zugrunde, ein Verfahren der beschriebenen Art so auszubilden, daß die empfängerseitige Offsetdemodulation synchron zur senderseitigen Offsetmodulation unter Beibehaltung der Kompatibilität zu bestehenden Fernsehnormen wie NTSC, SECAM, PAL, MAC und unter Berücksichtigung einer unsymmetrischen Frequenzbandteilung zwischen den in Basislage übertragenen Spektralanteilen und den Spektralanteilen erhöhter Auflösung ermöglicht wird.

Diese Aufgabe wird durch die im Anspruch 1 beschriebene Erfindung gelöst. Vorteilhafte Weiterbildungen der Erfindung sind in den abhängigen Ansprüchen beschrieben.

Bei der erfindungsgemäßen Lösung wird also die Information für die Phase über die empfängerseitige spektrale Addition des Basisband-Videosignals (0-5 MHz) mit dem durch die Offsetdemodulation gewonnenen Videosignal einerseits und die Information für die Offsetmodulationsphase durch zwei Schwingungen unterschiedlicher Frequenz übertragen. Dadurch ergibt sich der Vorteil, daß die Addition des im Basisband übertragenen Videosignals mit dem durch die Offsetdemodulation gewonnenen Videosignal, das die erhöhte Auflösung bewirkt, durch einen beliebigen Flankenverlauf eines Tiefpasses für das erstgenannte und eines Hochpasses für das zweitgenannte Signal erfolgen kann. Dabei ist angenommen, daß die Addition über eine entsprechende komplementäre Hochpaß-Tiefpaß-Aufspaltung erfolgt, wobei die Frequenz fb der ersten Schwingung im Flankenschnittpunkt liegt. Für die Frequenzlage des Überlappungsbereiches zwischen den beiden genannten Videosignalen, d.h. den Schnittpunkt der Kennlinien des Tiefpasses für das erste Videosignal und des Hochpasses für das zweite Videosignal, ergibt sich daher ein größerer Freiheitsgrad. Dieser kritische Frequenzbereich kann daher in vorteilhafter Weise zur Vermeidung von Störungen einen ausreichenden Abstand von zusätzlich übertragenen Signalen, wie z.B. einem PAL-Farbträger, aufweisen.

Die Erfindung wird im folgenden an Hand der Zeichnung erläutert. Darin zeigen

Fig. 1    ein Blockschaltbild für die Realisierung des erfindungsgemäßen Verfahrens,

Fig. 2    die Lage der zusätzlichen Signalinformation, d.h. des Zusatzspektrums, tiefpaßgefiltert und amplitudenreduziert, und zwar

Fig. 2a    bei kompatibler Übertragung und

Fig. 2b    nach Offsetdemodulation und Amplitudenanhebung,

Fig. 3    die spektrale Lage der das Referenzsignal darstellenden zwei Schwingungen,

Fig. 4    ein Blockschaltbild zur empfängerseitigen Phasenregelung und

Fig. 5    ein Blockschaltbild einer Weiterbildung der Erfindung mit zwei Übertragungskanälen.

In der folgenden Beschreibung werden folgende Symbole verwendet:

fb =    Frequenz der ersten übertragenen Schwingung S1 des Referenzsignals

fo =    maximale Frequenz des senderseitig und empfänger seitig nach der Offsetdemodulation verfügbaren, breitbandigen Videosignals Y

fo-fb =    Frequenz der zweiten übertragenen Schwingung des Referenzsignals

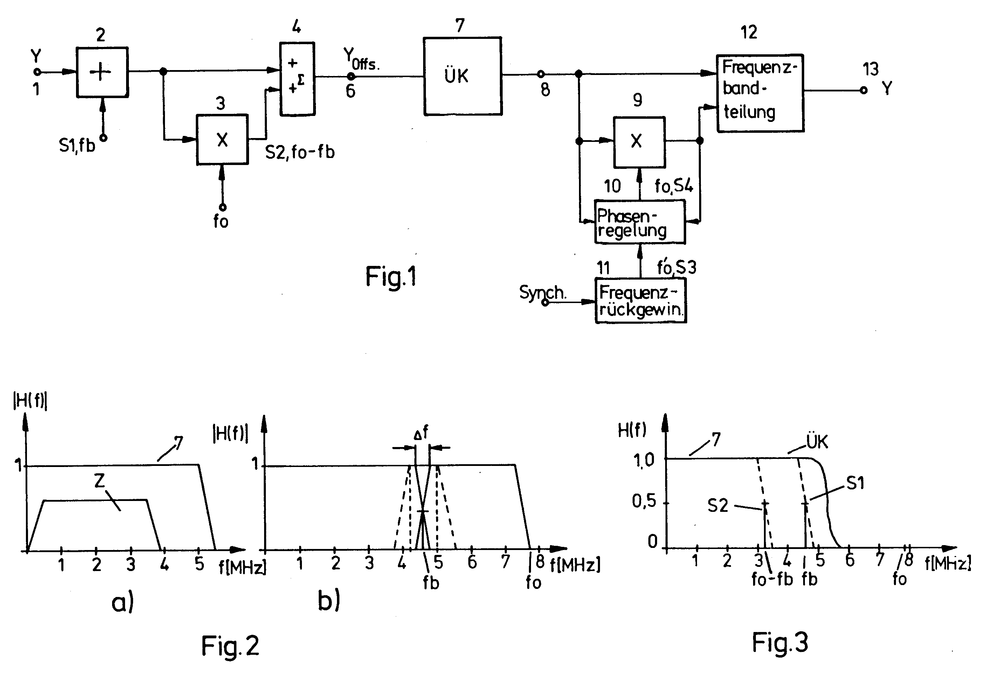

In Fig. 1 wird der Eingangsklemme 1 das Leuchtdichtesignal Y zugeführt, das Spektralanteile für eine erhöhte Auflösung beinhaltet und z.B. eine erhöhte Bandbreite von 7-8 MHz hat. Mittels einer Einblendschaltung 2, die in der EP-A-0 158 770 näher beschrieben ist, werden in der Vertikalaustastlükke in jedem Halbbild in eine Leerzeile, z.B. die Zeilen Nr. 15 und 328, für die Dauer dieser Zeile Schwingungen S1 eines Referenzsignals mit der Frequenz fb eingefügt. Mit einem Offsetmodulator 3, der in der EP-A-0 146 694 näher beschrieben ist, werden mit der Offsetmodulationsfrequenz fo die Schwingungen S1 mit der Frequenz fb in Schwingungen S2 mit der Frequenz fo-fb umgesetzt. In der Addierstufe 4 werden die Schwingungen S1, S2 mit den Frequenzen fb und fo-fb zusammengesetzt und stehen an der senderseitigen Ausgangsklemme 6 für die Übertragung zur Verfügung. Die Übertragung erfolgt über den Übertragungskanal 7, so daß an der empfängerseitigen Eingangsklemme 8 die Schwingungen S1, S2 mit den Frequenzen fb und fo-fb zur Verarbeitung anstehen. Die Summe aus den Schwingungen S1, S2 mit den Frequenzen fb und fo-fb wird dem Offsetdemodulator 9 zugeführt, der analog zu dem senderseitigen Offsetmodulator 3 ausgeführt ist. Der Offsetdemodulator 9 arbeitet im ungeregelten Zustand mit einer Schwingung S3 mit der Frequenz fo', die mit Hilfe von Synchronsignalen wie Zeilensynchronimpulsen in einer PLL-Schaltung in der Frequenzrückgewinnungsschaltung 11 erzeugt wird. Die Schwingung S3 mit der Frequenz fo' hat zunächst eine willkürliche Phasenlage. Die sich nach der Offsetdemodulation der Schwingungen S1, S2 mit den Frequenzen fb und fo-fb am Ausgang des Offsetdemodulators 9 ergebenden Schwingungen werden in der Phasenregelschaltung 10 bezüglich der Phasenlagen mit den an der Klemme 8 gelieferten Schwingungen mit den Frequenzen fb und fo-fb verglichen. Dadurch entsteht eine Regelung derart, daß die zunächst willkürliche Phasenlage von S3 auf eine Schwingung S4 mit der Sollphasenlage von fo geregelt wird. Damit herrscht zwischen senderseitiger Offsetmodulation und empfängerseitiger Offsetdemodulation Phasensynchronität.

Das über den Kanal 7 gelieferte Basis-Videosignal von ca. 0-5 MHz und die durch Offsetdemodulation erzeugten Videosignale von ca. 5-8 MHz werden der Schaltung 12 zur unsymmetrischen Frequenzbandteilung zugeführt. Eine solche Schaltung ist näher beschrieben in der DE-A-34 35 264. An der empfängerseitigen Ausgangsklemme 13 steht dann das Leuchtdichtesignal Y mit der erhöhten Bandbreite von ca. 8 MHz für eine Bildwiedergabe mit erhöhter Auflösung zu Verfügung.

Fig. 2a zeigt die tiefpaßgefilterte und amplitudenreduzierte zusätzliche Signalinformation, d.h. das durch die Offsetmodulation entstandene Zusatzspektrum Z zur Erhöhung der Detailauflösung, bezüglich seiner Lage innerhalb des Übertragungskanals 7.

Fig. 2b zeigt das gesamte Spektrum des Leuchtdichtesignals Y, wie es auf der Empfängerseite nach der Offsetdemodulation mit Amplitudenanhebung in der Stufe 9 und der Frequenzbandteilung in der Stufe 12 an der Klemme 13 zur Verfügung steht. Es ist ersichtlich, daß dieses Spektrum mit etwa 8 MHz eine größere Bandbreite hat als der Übertragungskanal 7 mit etwa 5 MHz. Die Addition der im Basisband übertragenen Spektralanteile und der durch die Offsetdemodulation mit fo versetzten Spektralanteile des Zusatzspektrums erfolgt über den Flankenbereich Δf, wobei der phasenempfindlichste Punkt durch die Schwingung S1 mit der Frequenz fb repräsentiert wird.

Fig. 3 zeigt die spektralen Lagen der Schwingungen S1, S2 des Referenzsignals, wie sie senderseitig durch die Anordnung nach Fig. 1 erzeugt werden, relativ zum Übertragungskanal 7. Im PAL Fernsehstandard (PAL (G)) können die angegebenen Frequenzen fo, fb folgende Werte haben:

fo = 7,8 MHz
fb = 4,7 MHz
fo-fb = 3,1 MHz.

Dabei entspricht fo etwa der höchsten Frequenz des auf der Wiedergabeseite erzeugten Spektrums gemäß Fig. 2b.

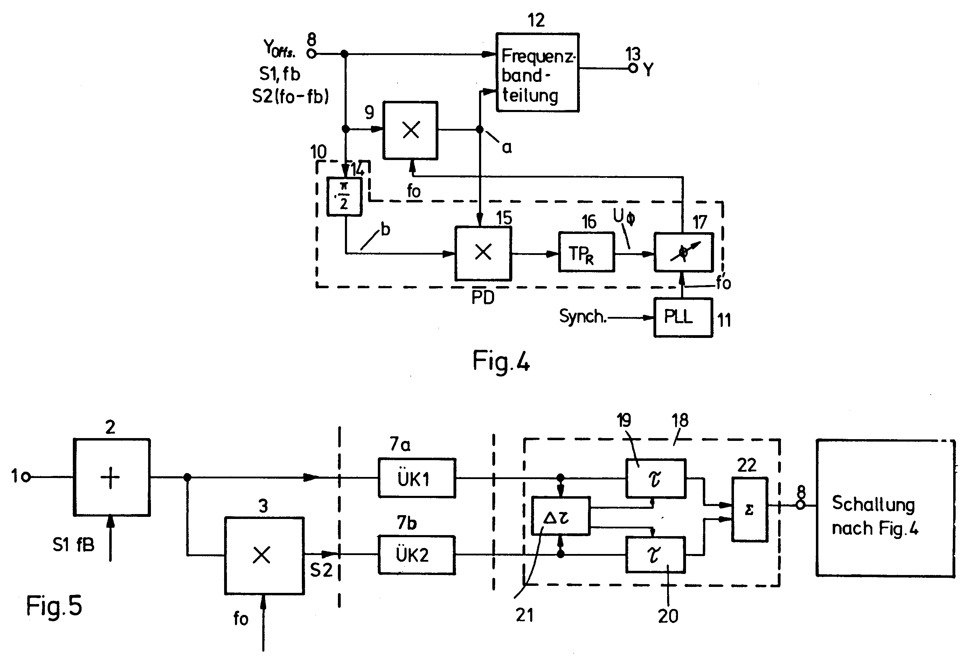

Fig. 4 zeigt ein Blockschaltbild der empfängerseitigen Phasenregelung 10 gemäß Fig. 1.

Über den Übertragungskanal wird die Schwingung S1 der Frequenz fb und die durch die senderseitige Modulationsphase $\theta s$ beeinflußte Schwingung S2 der Frequenz (fo-fb) geliefert. Für die Regelung stehen also am Empfänger die Signale

$$\cos [2 \pi \text{ fb.t}] + \cos [2 \pi \text{ (fo-fb).t} + \theta s] \qquad (1)$$

zur Verfügung. Der empfängerseitige Offsetdemodulator 9 arbeitet zunächst im ungeregelten Zustand mit einer Frequenz fo', die mit einer willkürlichen Phase $\theta e$ behaftet ist. Die Frequenz fo' wird mittels einer Frequenzrückgewinnung (PLL) 11 aus dem Zeilensynchronimpuls gewonnen. Dabei gilt die phasenmäßige Beziehung

$$\text{fo'.t} = \text{fo.t} + \theta e . \qquad (2)$$

Die Modulation der Schwingungen nach Gl.(1) mit fo' nach Gl. (2) wird durch

$$\{\cos [2 \pi \text{ fb.t}] + \cos [2 \pi \text{ (fo-fb) .t} + \theta s]\}.2\cos [2 \pi \text{ fo.t} + \theta e] \qquad (3)$$

beschrieben.

Nach Offsetdemodulation folgt für den Punkt a in Fig. 4:

$$\cos [2 \pi(\text{fb} + \text{fo}).\text{t} + \theta e] + \cos [2 \pi \text{ (fo-fb).t} + \theta e] + \cos [2 \pi \text{ (2fo-fb).t} + \theta s + \theta e] + \cos [2 \pi \text{ fb.t} + \theta e - \theta s] \qquad (4)$$

Da der stabile Arbeitspunkt der Regelung bei der Phasendifferenz $\Delta \theta = 0$ liegt, werden die Eingangssignale nach Gl. 1 einem 90°-Phasenschieber 14 zugeführt. Der als Multiplizierer ausgeführte Phasendetektor (PD) 15 erhält die Signale nach Gl. 4 und am Punkt b die um 90° phasenverschobenen Eingangssignale.

Punkt b:

$$\cos [2 \pi \text{ fb.t} + \pi/2] + \cos [2 \pi \text{ (fo-fb).t} + \theta s + \pi/2] = - \{\sin [2 \pi \text{ fb.t}] + \sin [2 \pi \text{ (fo-fb) .t} + \theta s]\} \qquad (5)$$

Die Multiplikation der Ausdrücke nach Gl. 4 und Gl. 5 liefert dann nach Filterung über den Tiefpaß TPR 16 der Regelschleife eine Steuergleichspannung für den Phasenschieber 17. Die Rechnung führt für die Steuerspannung U$\theta$ auf

$$U\theta = \sin(\theta e - \theta s). \qquad (6)$$

Die Regelung arbeitet nun derart, daß das Argument der Sinusfunktion zu null wird, d.h.

$$\theta e = \theta s.$$

Der Phasenschieber 17 weist einen Arbeitsbereich über ±180° auf.

In Fig. 5 werden die in Fig. 1 beschriebenen Signale vom Ausgang der Einblendschaltung 2 und des Offsetmodulators 3 nicht addiert, sondern über getrennte Übertragungskanäle 7a und 7b übertragen. Das kann sinnvoll sein, wenn z.B. ein Übertragungskanal aus Gründen der Bandbreite nicht ausreicht, in der Bandbreite begrenzte Kabelstrecken vorliegen oder die beiden Signale auf getrennten Spuren eines Magnetbandes aufgezeichnet werden. Bei einer derartigen Übertragung über zwei getrennte Übertragungskanäle können unterschiedliche Laufzeiten auftreten, so daß die Signale empfängerseitig zeitlich nicht mehr übereinstimmen. Zum Ausgleich dieser Zeitabweichung werden in der Empfängerschaltung 18 die Signale der beiden Übertragungskanäle 7a,7b über zwei steuerbare Laufzeitglieder 19,20 geführt und außerdem an die Eingänge einer Laufzeit-Vergleichsstufe 21 angelegt. In der Vergleichsstufe 21 wird die zeitliche Lage der Signale der beiden Kanäle 7a,7b zueinander ermittelt. Vorzugsweise wird mit den Zeilensynchronimpulsen der Signale der beiden Kanäle 7a,7b ein Start/Stop-Oszillator gesteuert, der zwischen zwei Zeilensynchronimpulsen, die an sich zeitgleich sein sollen, eine Impulsfolge konstanter Frequenz erzeugt. Die Zahl der Impulse wird mit einem Zähler gezählt. Das Zählergebnis ist ein Maß für die zeitliche Abweichung zwischen den Zeilensynchronimpulsen der Signale der beiden Kanäle 7a,7b. Das Zählergebnis wird in eine analoge oder digitale Regelspannung umgewandelt, die je nach Richtung der Zeitverschiebung das Laufzeitglied 19 oder 20 und damit die im Signalweg wirksame Verzögerungszeit so steuert, daß die Signale an den Eingängen der Addierstufe 22 zeitgleich sind. In der Laufzeit-Vergleichsstufe 21 werden sowohl die Vertikalsynchronimpulse als auch die Zeilensynchronimpulse der Signale der beiden Kanäle 7a und 7b in der beschriebenen Weise verglichen. Die Regelung mit den Laufzeitgliedern 19,20 erfolgt so, daß an den Eingängen der Addierstufe 22 die Signale der beiden Kanäle 7a,7b zeitgleich sind, d.h. Vertikalsynchronimpulse und Zeilen gleicher Ordnungszahl jeweils eines Bildes in den beiden Kanälen 7a,7b zeitlich zusammenfallen. Diese Regelung erfolgt so genau, daß maximal eine Abweichung von ± einer halben Periodendauer der Frequenz fo bestehenbleibt. Diese Genauigkeit wird durch die an die Klemme 8 angeschlossene Empfängerschaltung gem. Fig. 4 gefordert. Die Laufzeitglieder 19,20 haben eine Grundlaufzeit, so daß die im Signalweg wirksame Laufzeit durch die von der Phasenvergleichsstufe 21 kommende Regelspannung jeweils sowohl vergrößert als auch verkleinert werden kann. Derartige sogenannte Zeitfehler-Ausgleichschaltungen sind auf dem Gebiet der magnetischen Aufzeichnungstechnik (MAZ) bekannt und z.B. beschrieben in dem "Videohandbuch" von van Wetzel.

Die bisher beschriebenen Anordnungen werden anhand der Offsetmodulation/-Demodulation für analoge Signalverarbeitung dargestellt. Es ist grundsätzlich möglich, sämtliche Einrichtungen für eine digitale Signalverarbeitung aufzubauen. Die Modulatoren/Demodulatoren müssen dann durch entsprechende digitale Abtaster/Nachabtaster ersetzt werden.

Das erfindungsgemäße Verfahren eignet sich sowohl zur Übertragung von Fernsehsignalen als auch zur Synchronisierung bei der Wiedergabe beispielsweise mittels Videorecordern aufgezeichneter Fernsehsignale.

**Patentansprüche**

1. Verfahren zur kompatiblen Erhöhung der Auflösung bei einem Farbfernsehsystem, bei dem senderseitig ein Teil des Signals durch eine Offsetmodulation (3) in der Frequenz umgesetzt und empfängerseitig durch eine Offsetdemodulation (9) rückumgesetzt wird, wobei während einer Leerzeile der Vertikalrücklaufzeit ein Referenzsignal für die Offsetdemodulation (9) übertragen wird, **gekennzeichnet** durch folgende Merkmale:
   - das Referenzsignal besteht aus einer ersten Schwingung (S1) mit einer ersten Phase und mit der Frequenz fb, die den Flankenschnittpunkt der empfängerseitig zusammenzusetzenden - und zu den durch die Offsetmodulation gebildeten Teilspektren gehörenden - Flanken repräsentiert, und aus einer zweiten Schwingung (S2) mit einer zweiten Phase und mit der Frequenz fo-fb, die aus der Differenz der zu verwendenden Offsetmodulations-Frequenz fo und der Frequenz fb gebildet ist;
   - die Frequenz fb der ersten Schwingung (S1) ist größer als die Hälfte der Offsetmodulations-Frequenz fo;
   - mit Hilfe der beiden Schwingungen (S1, S2) wird die empfängerseitige Offsetdemodulation (9) und Addition der Teilspektren phasenrichtig durchgeführt, indem die beiden Schwingungen (S1, S2) als Referenzsignale für eine empfängerseitige Phasenregelung (10) herangezogen werden;
   - die empfängerseitige Phasenregelung (10) stellt eine über eine Frequenzrückgewinnung (11) erzeugte Offsetmodulations-Frequenz fo' (S3) mit einer zunächst willkürlich generierten Phasenlage in ihrer Phase identisch mit der senderseitigen Offsetmodulations-Frequenz fo ein.

2. Verfahren nach Anspruch 1, **dadurch gekennzeichnet,** daß empfängerseitig dem Offsetdemodulator (9) die Ausgangsspannung (S4) einer Phasenregelschaltung (10) zugeführt ist, an deren Eingänge der Eingang und der Ausgang des Offsetdemodulators (9) und der Ausgang (S3) einer von den Zeilensynchronimpulsen gesteuerten Frequenzrückgewinnungsschaltung (11) angeschlossen sind.

3. Verfahren nach Anspruch 2, **dadurch gekennzeichnet,** daß die Frequenz der Ausgangsspannung (S3) der Frequenzrückgewinnungsschaltung (11) gleich einem ganzzahligen vielfachen der Zeilenfrequenz des Videosignals ist.

4. Verfahren nach Anspruch 1, **dadurch gekennzeichnet,** daß die erste Schwingung (S1) und die zweite Schwingung (S2) über getrennte Übertragungskanäle (7a, 7b) übertragen werden.

5. Verfahren nach Anspruch 4, **dadurch gekennzeichnet,** daß empfängerseitig die Signale der beiden Übertragungskanäle (7a, 7b) einer Laufzeit-Vergleichsstufe (21) zugeführt werden, deren den Laufzeitunterschied der beiden Übertragungskanäle (7a, 7b) darstellende Ausgangsspannung auf Laufzeitglieder (19, 20) im ersten und/oder zweiten Übertragungskanal (7a, 7b) derart einwirkt, daß an den Ausgängen der Laufzeitglieder (19, 20) die übertragenen Signale gleiche zeitliche Lage haben.

6. Verfahren nach Anspruch 5, **dadurch gekennzeichnet,** daß die Steuerung der Laufzeiten der Laufzeitglieder (19, 20) derart erfolgt, daß die Signale an den Ausgängen der Laufzeitglieder (19, 20) einen Zeitunterschied von maximal der halben Periodendauer ±1/(2*fo) der höchsten Frequenz (fo) des die erhöhte Auflösung darstellenden Videosignals haben.

7. Verfahren nach Anspruch 5 oder 6, **dadurch gekennzeichnet,** daß in der Laufzeit-Vergleichsstufe (21) ein Vergleich der zeitlichen Lage der Vertikalsynchronimpulse und der Zeilensynchronimpulse der Signale der beiden Übertragungskanäle (7a, 7b) derart erfolgt, daß an den Ausgängen der beiden Laufzeitglieder (19, 20) Zeilen gleicher Ordnungszahl der beiden Übertragungskanäle zeitlich zusammenfallen.

**Claims**

1. Process to achieve a compatible enhancement of the resolution of a colour TV system, whereby on the transmission side one signal element is transposed by an offset modulation (3) in the frequency and at the receiving end is re-transposed by an offset demodulation (9), whereby a reference signal for the offset demodulation (9) is transmitted during a vacant line of the vertical return time, characterised by the following features:
   - the reference signal consists of a first oscillation (S1) with a first phase and with the frequency fb, which represents the edge intersections of the edges to be combined at the receiving end - and belonging to the partial spectra formed by the offset modulation - and of a second oscillation (S2) with a second phase and with the frequency fo-fb, which is formed from the difference between the offset modulation frequency fo to be used and the frequency fb;
   - the frequency fb of the first oscillation (S1) is higher than half the offset modulation frequency fo;
   - with the aid of the two oscillations (S1, S2) the offset demodulation (9) at the receiving end and the summation of the partial spectra are carried out in correct phase relation by using the two oscillations (S1, S2) as reference signals for a phase control (10) at the receiving end;

   - the phase control circuit (10) at the receiving end sets an offset modulation frequency fo' (S3) as generated by a frequency recovery circuit (11), which has an initially random generated phase angle identical in its phase to the offset modulation frequency fo on the transmission side.

2. Process as claimed in claim 1 characterised in that the output voltage (S4) of a phase control circuit (10) is connected at the receiving end to the offset demodulator circuit (9) and to the inputs of this phase control circuit the input and the output of the offset demodulation circuit (9) are connected and the output (S3) of a frequency recovery circuit (11) controlled by the line synchronization pulses.

3. Process as claimed in claim 2 characterized in that the frequency of the output voltage (S3) of the frequency recovery circuit (11) is equal to an integer multiple of the line frequency of the video signal.

4. Process as claimed in claim 1, characterised in that the initial oscillation (S1) and the second oscillation (S2) are transmitted by separate transmission channels (7a, 7b).

5. Process as claimed in claim 4, characterised in that at the receiving end the signals of the two transmission channels (7a, 7b) are conveyed to a preparation time comparison stage (21), the output voltage of which representing the difference in propagation time of the two transmission channels (7a, 7b) exerts an influence on delay elements (19, 20) in the first and/or second transmission channel (7a,7b) in such a way that the transmitted signals at the outputs of the delay elements (19, 20) have an identical time relation.

6. Process as claimed in claim 5 characterised in that the delays of the delay elements (19, 20) are controlled in such a way that the signals at the outputs of the delay elements (19, 20) have a time difference of no more than half the duration ±1/(2*fo) of the maximum frequency (fo) of the video signal representing the enhanced resolution.

7. Process as claimed in claim 5 or 6, characterised in that in the propagation time comparison stage (21) a comparison is made of the time relation of the vertical synchronization pulses and of the line synchronization pulses of the signals of the two transmission channels (7a, 7b), in such a way that lines of an identical ordinal number of the two transmission channels are coincident in time at the outputs of the two delay elements (19, 20).

**Revendications**

1. Procédé pour l'augmentation compatible de la définition pour un système de télévision en couleur dans lequel, côté émetteur, une partie du signal est transformée en fréquence par une modulation à décalage (3) et est retransformée, côté récepteur, par une démodulation à décalage (9), un signal de référence pour la démodulation à décalage (9) étant transmis pendant un interligne du temps de retour de balayage vertical, **caractérisé** par les caractéristiques suivantes :
   - le signal de référence se compose d'une première oscillation (S1) avec une première phase et avec la fréquence fb qui représente le point d'intersection de flancs des flancs qui doivent être assemblés côté récepteur - et qui appartiennent à des spectres partiels formés par la modulation à décalage - et d'une seconde oscillation (S2) avec une seconde phase et avec la fréquence fo-fb qui est formée par la différence de la fréquence de modulation à décalage à utiliser fo et de la fréquence fb :
   - la fréquence fb de la première oscillation (S1) est supérieure à la moitié de la fréquence de modulation à décalage fo :
   - la démodulation à décalage côte récepteur (9) et l'addition des spectres partiels est effectuée, à l'aide des deux oscillations S1, S2), de phase juste en utilisant les deux oscillations (S1, S2) comme signaux de référence pour un réglage de phase côté récepteur (10) :
   - le réglage de phase côté récepteur (10) règle une fréquence de modulation à décalage fo' (S3), produite par une récupération de fréquence (11), avec une relation de phase tout d'abord générée de manière arbitraire qui est identique, dans sa phase, avec la fréquence de modulation à décalage côté émetteur fo.

2. Procédé selon la revendication 1, **caractérisé en ce** que, côté récepteur, la tension de sortie (S4) d'un circuit de réglage de phase (10) est amenée au démodulateur à décalage (9), circuit aux entrées duquel sont branchées l'entrée et la sortie du démodulateur à décalage (9) et la sortie (S3) d'un circuit de récupération de fréquence (11) commandé par les impulsions de synchronisation ligne.

3. Procédé selon la revendication 2, **caractérisé en ce** que la fréquence de la tension de sortie (S3) du circuit de récupération de fréquence (11) est égale à un multiple entier de la fréquence ligne du signal vidéo.

4. Procédé selon la revendication 1, **caractérisé en ce** que la première oscillation (S1) et la seconde oscillation (S2) sont transmises par des canaux de transmission séparés (7a, 7b).

5. Procédé selon la revendication 4, **caractérisé en ce** que, côté récepteur, les signaux des deux canaux de transmission (7a, 7b) sont amenés à un étage comparateur de durée de parcours (21) dont la tension de sortie, qui représente la différence de durée de parcours des deux canaux de transmission (7a, 7b), agit sur des bascules de retard (19, 20) dans le premier et/ou le second canal de transmission (7a, 7b) de telle manière que les signaux transmis aux sorties des bascules de retard (19, 20) ont la même position temporelle.

6. Procédé selon la revendication 5, **caractérisé en ce** que la commande des durées de parcours des bascules de retard (19, 20) est effectuée de manière telle que les signaux aux sorties des bascules de retard (19, 20) ont une différence de temps d'au maximum une demie durée de période ± 1/(2*fo) de la plus haute fréquence (fo) du signal vidéo qui représente la définition augmentée.

7. Procédé selon la revendication 5 ou 6, **caractérisé en ce** qu'une comparaison de la position temporelle des impulsions de synchronisation verticale et des impulsions de synchronisation ligne des signaux des deux canaux de transmission (7a, 7b) est effectuée dans l'étage comparateur de durée de parcours (21) de telle manière que des lignes de même nombre ordinal des deux canaux de transmission coïncident dans le temps aux sorties des deux bascules de retard (19, 20).

EP 0 269 961 B1

Fig.1

Y
1

2
+
S1,fb

3
X
fo

4
+
+Σ

Y_Offs.
6

7
ÜK

8

9
X

10
Phasen-regelung
fo,S4

11
Frequenz-rückgewin.
fo,S3
Synch.

12
Frequenz-band-teilung

13
Y

Fig.2

a)

|H(f)|
1
Z
7
1  2  3  4  5  f[MHz]

b)

|H(f)|
1
Δf
fb
fo
1  2  3  4  5  6  7  8  f[MHz]

Fig.3

H(f)
1,0
0,5
0
7
ÜK
S1
S2
fo-fb  fb  fo
1  2  3  4  5  6  7  8  f[MHz]

Fig.4

Fig.5

EP 0 269 961 B1